# FASCICULE DE BREVET EUROPEEN

(11) **EP 2 139 712 B1**
(45) Date de publication et mention de la délivrance du brevet: **22.02.2012**
(21) Numéro de dépôt: 08775620.1
(22) Date de dépôt: 03.03.2008
(51) Int. Cl.: B60J 10/00, B60J 10/04, B60J 10/08, B60J 10/06

(54) **SYSTEME D'ETANCHEITE POUR OUVRANT DE PORTE À VITRAGE MOBILE D'UN VEHICULE, SON PROCEDE DE FABRICATION ET VEHICULE L'INCORPORANT**
DICHTUNGSSYSTEM FÜR EIN FENSTER IN EINER FAHRZEUGTÜR, VERFAHREN ZU DESSEN HERSTELLUNG UND FAHRZEUG DAMIT
SEALING SYSTEM FOR A WINDOW IN A VEHICLE DOOR, METHOD FOR MAKING SAME AND VEHICLE INCLUDING SAME

(30) Priorité: 01.03.2007 FR 0701495
(43) Date de publication de la demande: 06.01.2010
(73) Titulaire: Hutchinson, 75008 Paris (FR)
(72) Inventeur: COLDRE, Laurent, F-45390 La Neuville Sur Essonne (FR); LAUDE, Olivier, F-45200 Amilly (FR)
(74) Mandataire: Bolinches, Michel Jean-Marie
(86) Numéro de dépôt international: PCT/FR2008/000277
(87) Numéro de publication internationale: WO 2008/132302

(56) Documents cités:
- EP-A- 0 384 852
- EP-A- 0 938 995
- EP-A- 1 522 445
- DE-A1- 19 627 622
- GB-A- 2 312 460
- GB-A- 2 426 275
- US-A1- 2005 072 053

## Description

La présente invention concerne un système d'étanchéité pour un ouvrant de porte à vitrage mobile d'un véhicule à moteur, un procédé de fabrication de ce système d'étanchéité et un tel véhicule l'incorporant. L'invention s'applique à des systèmes d'étanchéité comportant des profilés d'étanchéité de type à joints de coulisse et de léchage de vitrage mobile qui sont utilisables dans tous types de véhicules à moteur, tels que des véhicules automobiles, aéronautiques, ferroviaires ou des bateaux.

De manière connue, les systèmes d'étanchéité pour vitrages mobiles de portes de véhicule automobile peuvent présenter des surfaces décoratives interne et externe, via des enjoliveurs intérieurs et extérieurs qui sont rapportés sur les profilés d'étanchéité correspondants. Dans ce domaine de l'étanchéité latérale sur porte vitrée, les profilés utilisés peuvent être notamment de type joints de coulisse et de type joints de léchage du vitrage (comprenant des lécheurs intérieur et extérieur). On doit alors fabriquer et monter séparément au moins les éléments suivants sur chaque porte vitrée latérale du véhicule, à titre non limitatif :
- le joint de coulisse, composé d'un ou de plusieurs brins assemblés ensemble par exemple par moulage, soudure ou accostage,
- l'enjoliveur extérieur du joint de coulisse qui, dans le cas le plus répandu d'une coulisse à cadre caché, peut être par exemple rapporté par ancrage sur ce joint, comme illustré dans le document DE-B-101 47 015,
- un panneau de garnissage intérieur du cadre de porte,
- un enjoliveur extérieur du cadre vertical de porte (également appelé « pied milieu » de la carrosserie, du fait que ce cadre vertical sépare les portes avant et arrière dans le cas particulier d'un véhicule à quatre portes latérales),
- un enjoliveur intérieur de ce cadre vertical de porte, dans le cas d'un pied milieu caché, et
- les lécheurs intérieur et extérieur du vitrage.

Un inconvénient majeur des systèmes d'étanchéité incorporant l'ensemble de ces éléments est que ces derniers doivent être fabriqués indépendamment les uns des autres et avec des technologies souvent différentes, puis assemblés séparément d'une manière prédéterminée sur le véhicule, ce qui implique des coûts de fabrication, de logistique et d'assemblage très élevés en raison notamment de la multiplicité des pièces à fabriquer et à assembler, des différents équipementiers concernés et des diverses technologies utilisées pour la fabrication de ces pièces.

Le document GB-A-2 312 460 présente un système d'étanchéité selon le préambule de la revendication 1, pour un ouvrant de porte à vitrage mobile comprenant une garniture extérieure comportant un joint de coulisse pourvu d'un enjoliveur extérieur, et une garniture intérieure incorporant un joint d'étanchéité intérieur pourvu d'un enjoliveur intérieur, chacune de ces garnitures étant monobloc et en partie moulée. On notera cependant que dans ce document, aucun des joints de léchage intérieur et extérieur du vitrage n'est inclus dans les garnitures intérieure et extérieure correspondantes.

Un but de la présente invention est de proposer un système d'étanchéité pour un ouvrant de porte à vitrage mobile d'un véhicule à moteur qui remédie à ces inconvénients, ce système comprenant au moins :
- une garniture extérieure comportant un joint de coulisse pourvu d'un enjoliveur extérieur, et
- une garniture intérieure pour ledit ouvrant incorporant un joint d'étanchéité intérieur pourvu d'un enjoliveur intérieur,
chacune desdites garnitures étant formée d'une pièce d'un seul tenant qui est au moins en partie moulée.

A cet effet, un système d'étanchéité selon l'invention est tel que ce système d'étanchéité comprend en outre deux joints de léchage respectivement intérieur et extérieur pour le vitrage qui sont respectivement inclus dans lesdites garnitures intérieure et extérieure.

Par « garniture extérieure » et « garniture intérieure », on entendra de manière connue dans la présente description les parties respectivement extérieure et intérieure d'un système d'étanchéité ou garnissage assurant à la fois des fonctions d'étanchéité et d'aspect (i.e. de décoration).

On notera qu'un système d'étanchéité selon l'invention intègre avantageusement en une pièce monobloc l'ensemble coulisse / joints de léchage intérieur ou extérieur / enjoliveurs associés, en formant ainsi une unique pièce d'un seul tenant pour chaque garniture intérieure et extérieure, via un moulage par injection ou un surmoulage, comme expliqué ci-après.

On notera également qu'un système d'étanchéité selon l'invention peut être monté aussi bien sur un cadre de l'ouvrant de porte que, dans le cas d'un ouvrant dépourvu de cadre pour le vitrage mobile, directement sur la caisse du véhicule (dans ce dernier cas où l'enjoliveur extérieur est fixé sur la caisse, on parle de « gouttière » ou de double étanchéité sur caisse).

Un système d'étanchéité selon l'invention peut ainsi intégrer d'une manière monobloc, en chacun des deux côtés extérieur et intérieur de l'ouvrant concerné du véhicule, non seulement les coulisses et les enjoliveurs associés, mais encore les lécheurs extérieurs et intérieurs correspondants avec les fonctions d'aspect associées auxdits enjoliveurs.

Selon un premier mode de réalisation de l'invention, l'un au moins desdits enjoliveurs extérieur et intérieur peut être formé d'un seul tenant avec le reste de la garniture correspondante via une interface adhérente (i.e. qui réalise la solidarisation par contact adhérent du fait du moulage des deux parties d'étanchéité et d'aspect de la garniture).

Conformément à ce premier mode, la garniture extérieure et/ou la garniture intérieure peut/ peuvent alors être avantageusement constituée(s) d'une pièce moulée par mono-injection ou par bi-injection.

Selon un second mode de réalisation de l'invention, l'un au moins desdits enjoliveurs extérieur et intérieur est formé d'un seul tenant avec le reste de la garniture correspondante via un accrochage mécanique obtenu par surmoulage d'un insert formant ce joint par une matière injectée formant l'enjoliveur.

Selon une autre caractéristique de l'invention concernant spécifiquement les systèmes d'étanchéité qui comprennent des coulisses à cadre caché et qui sont conçus pour un ouvrant sans cadre de porte pour ledit vitrage, le système d'étanchéité selon l'invention est apte à assurer des fonctions d'étanchéité et de décor, à la fois :
- du côté extérieur du véhicule, ce système comportant, à titre de garniture extérieure, un joint de demi-coulisse extérieure qui est adapté pour être monté sur ledit cadre de porte et avec lequel est formé d'un seul tenant, par moulage, ledit enjoliveur extérieur, et
- du côté intérieur du véhicule, ce système comportant, à titre de garniture intérieure, ledit enjoliveur intérieur qui est également adapté pour être monté sur ledit cadre de porte et qui comprend un joint de demi-coulisse intérieure formé d'un seul tenant, par moulage, avec ledit enjoliveur intérieur.

Selon un premier exemple de réalisation de l'invention, ledit système d'étanchéité peut être alors apte à équiper un pied milieu apparent pour le véhicule (dans le cas particulier d'un véhicule à quatre portes latérales), au sein d'une coulisse à cadre caché.

Conformément à ce premier exemple, ledit enjoliveur intérieur peut avantageusement présenter une section transversale sensiblement en U, dont une aile se prolonge par ledit joint de demi-coulisse intérieure qui forme une lèvre d'étanchéité destinée à appuyer élastiquement sur une face intérieure dudit vitrage.

Egalement conformément à ce premier exemple, ledit enjoliveur extérieur peut avantageusement prolonger sensiblement à angle droit ledit joint de demi-coulisse extérieure à la manière du sommet d'un « n », dont les deux branches sont conçues pour venir enserrer une patte axiale dudit cadre, et cet enjoliveur extérieur peut être pourvu d'une lèvre d'étanchéité prolongeant ce sommet du « π » et destinée à appuyer élastiquement sur une face extérieure dudit vitrage.

Selon un second exemple de réalisation de l'invention, ledit système d'étanchéité peut être alors apte à équiper un pied milieu masqué pour le véhicule (toujours dans le cas d'un véhicule à quatre portes latérales), au sein d'une coulisse à cadre caché.

Conformément à ce second exemple, ledit enjoliveur intérieur peut avantageusement présenter une section transversale sensiblement en U, dont une première aile se prolonge par ledit joint de demi-coulisse intérieure qui forme une lèvre d'étanchéité destinée à appuyer élastiquement sur une face intérieure dudit vitrage, et dont la seconde aile se prolonge sensiblement à angle droit en s'éloignant de la première aile par une portion de fixation destinée à être solidarisée, par exemple via un adhésif, avec un profilé de renfort dudit cadre.

Egalement conformément à ce second exemple, l'enjoliveur extérieur peut avantageusement prolonger sensiblement à angle droit, à la manière du jambage principal d'un « λ », ledit joint de demi-coulisse extérieure, et ledit enjoliveur extérieur peut être pourvu d'au moins une lèvre d'étanchéité prolongeant la base de ce jambage sensiblement dans la même direction et destinée à appuyer élastiquement sur une face extérieure du vitrage.

Selon une autre caractéristique de ce second exemple de l'invention, l'autre base du « λ » formant ledit joint de demi-coulisse extérieure peut être également pourvue d'une lèvre d'étanchéité destinée à appuyer élastiquement sur la face intérieure dudit vitrage.

Selon une autre caractéristique de ce second exemple de l'invention, le jambage principal du « λ » formé par ledit enjoliveur extérieur peut être pourvu sur sa face axialement interne de moyens de solidarisation de cet enjoliveur extérieur avec ledit profilé de renfort de cadre, par exemple par accrochage mécanique tel qu'un clipage et/ou par un adhésif.

Un procédé de fabrication selon l'invention d'un système d'étanchéité tel que défini précédemment est tel qu'il comprend :
- un moulage par injection, par exemple par mono-injection ou bi-injection, de l'une au moins desdites garnitures extérieure et intérieure pour la solidarisation via une interface adhérente dudit enjoliveur correspondant avec le reste de la garniture correspondante, ou bien
- un surmoulage d'un insert formant le ou chaque joint par une matière injectée formant l'enjoliveur correspondant, pour la solidarisation via un accrochage mécanique dudit ou chaque enjoliveur au joint correspondant,
ces garnitures extérieure et intérieure incluant respectivement deux joints de léchage extérieur et intérieur pour le vitrage et étant formées chacune d'un seul tenant.

A titre de matériaux utilisables pour constituer les enjoliveurs intérieurs et/ou extérieurs dudit système d'étanchéité, on peut citer :
- à titre préférentiel, des matériaux thermoplastiques par exemple à base de polyméthacrylate de méthyle (PMMA), d'un polyamide (PA), d'une résine acrylonitrile/ butadiène/ styrène (ABS), de polycarbonate (PC) ou d'une résine acrylate/styrène/acrylonitrile (connue sous le nom « ASA » et obtenue par introduction d'un élastomère à base d'acrylate lors de la copolymérisation du styrène et de l'acrylonitrile), les polybutylène téréphtalates (PBT), les polyéthylène téréphtalates (PET), leurs mélanges, ou
- des matériaux thermodurcissables.

A titre de matériaux utilisables pour constituer les joints de coulisse et/ou de léchage dudit système d'étanchéité, on peut citer :
- à titre préférentiel, des élastomères thermoplastiques (TPE) par exemple tels que des vulcanisats thermoplastiques (TPV), comme le « Vegaprene » ou le « Santoprène », ou bien
- des matériaux à base de caoutchoucs, par exemple tels que des terpolymères éthylène/ propylène/ diène (EPDM).

Un véhicule à moteur selon l'invention est du type comportant une caisse et au moins un ouvrant de porte qui incorpore un vitrage mobile, par exemple un vitrage de porte latérale avant ou arrière d'un véhicule automobile, et qui est pourvu d'un système d'étanchéité monté sur ledit ou chaque ouvrant ou sur ladite caisse, et ce véhicule est tel que ce système d'étanchéité est tel que défini ci-dessus en relation avec la présente invention.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec les dessins joints, parmi lesquels :
la figure 1 est une vue de face schématique de la face intérieure d'un ouvrant de porte latérale d'une automobile incorporant un système d'étanchéité selon l'invention sur le pourtour du vitrage de l'ouvrant,
la figure 2 est une vue de face schématique de la face extérieure de l'ouvrant de la figure 1 incorporant ce système d'étanchéité,
la figure 3 est une vue assemblée en coupe transversale selon le plan III-III de la figure 1 d'un premier exemple de réalisation selon l'invention de ce système d'étanchéité, relatif à une coulisse à cadre caché avec pied milieu du véhicule apparent,
la figure 4 est une vue éclatée en coupe transversale du système d'étanchéité selon l'exemple de la figure 3,
la figure 5 est une vue éclatée en coupe transversale selon le plan V-V de la figure 1 du système d'étanchéité selon ce premier exemple des figures 3 et 4,
la figure 6 est une vue assemblée en coupe transversale selon le plan VI-VI de la figure 2 d'un second exemple de réalisation d'un système d'étanchéité selon l'invention, relatif à une coulisse à cadre caché avec pied milieu du véhicule masqué, et
la figure 7 est une vue éclatée en coupe transversale du système d'étanchéité selon l'exemple de la figure 6.

Dans ce qui suit, on utilisera les qualificatifs « axialement interne » et « axialement externe » pour désigner la position d'un élément de chaque système d'étanchéité vers l'intérieur et vers l'extérieur, respectivement, dans la direction axiale Y de la largeur du véhicule.

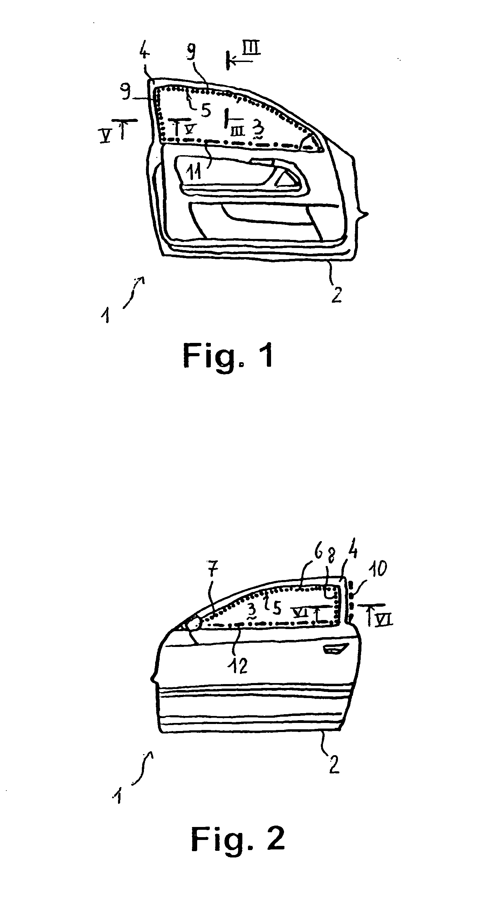

L'ouvrant de porte latérale 1 qui est illustré aux figures 1 et 2 en relation avec un véhicule à moteur, tel qu'une automobile, comporte essentiellement une portière 2 surmontée d'un vitrage coulissant 3 qui est monté, dans cet exemple, sur un cadre de porte 4. Cet ouvrant 1 incorpore un système d'étanchéité 5 selon l'invention sur le pourtour du cadre 4, ce système 5 comprenant notamment :
- un joint de coulisse 6 (illustré en pointillés à la figure 2) à brins supérieur 7 et vertical 8 et un enjoliveur extérieur de ce joint de coulisse 6 (non visible),
- un garnissage et un enjoliveur intérieurs 9 du cadre 4 (illustrés en pointillés à la figure 1),
- un enjoliveur extérieur 10 du cadre vertical ou pied milieu (illustré sous forme de tirets à la figure 2), dans le cas d'un véhicule à quatre ouvrants 1 latéraux, et
- les lécheurs intérieur 11 et extérieur 12 du vitrage 3 (respectivement illustrés sous forme de traits mixtes aux figures 1 et 2).

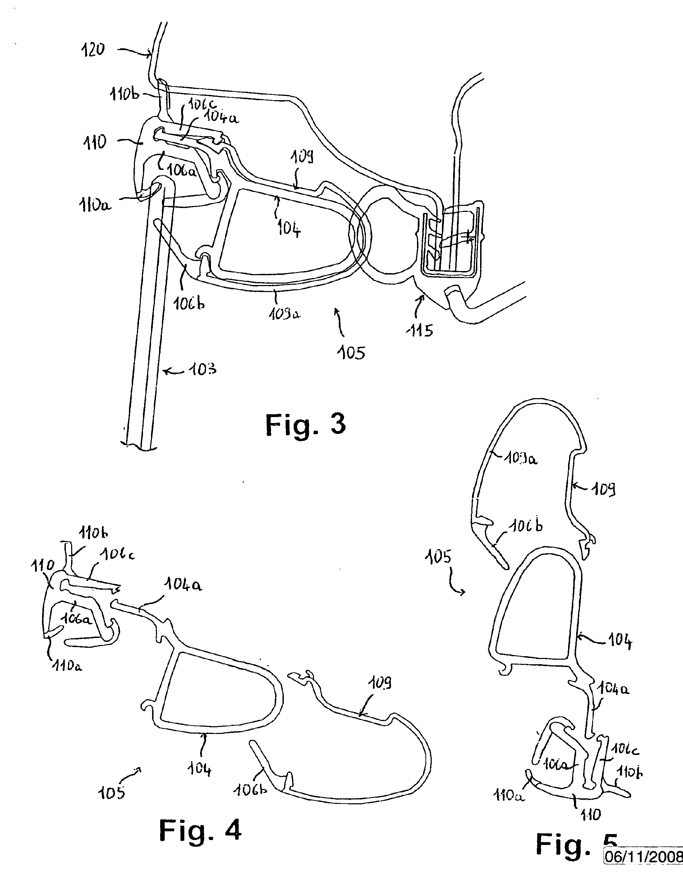

Le système d'étanchéité 105 illustré en vue éclatée aux figures 4 et 5 et en vue assemblée à la figure 3 correspond à un premier exemple de réalisation de l'invention qui concerne une coulisse à cadre caché de type à pied milieu apparent et qui illustre à la fois les parties intérieure et extérieure selon l'invention - toutes deux monobloc et obtenues par moulage - de ce système d'étanchéité 105. Comme illustré à la figure 3, ce dernier est destiné à coopérer avec un joint d'étanchéité supérieur 115 de la caisse 120 du véhicule lors de la fermeture de l'ouvrant de porte 1.

Le plan de coupe III-III choisi pour les figures 3 et 4 correspond à une coupe réalisée transversalement dans la zone supérieure du système d'étanchéité 5 illustré à chacune des figures 1 et 2, alors que le plan de coupe V-V choisi pour la figure 5 correspond à une coupe réalisée transversalement dans la zone verticale de ce même système d'étanchéité 5.

Comme illustré sur ces figures 3 à 5, le système d'étanchéité 105 est apte à assurer à la fois des fonctions d'étanchéité et de décor :
- tant du côté extérieur du véhicule, ce système 105 comportant, à titre de garniture extérieure, un joint de demi-coulisse extérieure 106a qui est adapté pour être monté sur le cadre de porte 104 et avec lequel est formé d'un seul tenant, par moulage, un enjoliveur extérieur 110, que
- du côté intérieur du véhicule, ce système 105 comportant, à titre de garniture intérieure, un enjoliveur intérieur 109 qui est également adapté pour être monté sur le cadre 104 et qui comprend un joint de demi-coulisse intérieure 106b formé d'un seul tenant, par moulage, avec l'enjoliveur intérieur 109.

Plus précisément, l'enjoliveur extérieur 110 prolonge sensiblement à angle droit le joint de demi-coulisse extérieure 106a à la manière du sommet d'un « π » dont les deux branches 106a et 106c sont conçues pour venir enserrer une patte axiale 104a du cadre 104, et cet enjoliveur extérieur 110 est pourvu de deux lèvres d'étanchéité 110a et 110b qui prolongent les deux extrémités respectives du sommet du « π » et qui sont respectivement destinées à appuyer élastiquement sur la face extérieure du vitrage 103 et sur la caisse 120 du véhicule, dans la zone supérieure précitée du système d'étanchéité 105 (voir figure 3).

Quant à l'enjoliveur intérieur 109, il présente une section transversale sensiblement en U, dont une aile 109a se prolonge par le joint de demi-coulisse intérieure 106b qui forme une lèvre d'étanchéité destinée à appuyer élastiquement sur la face intérieure du vitrage 103 (voir figure 3).

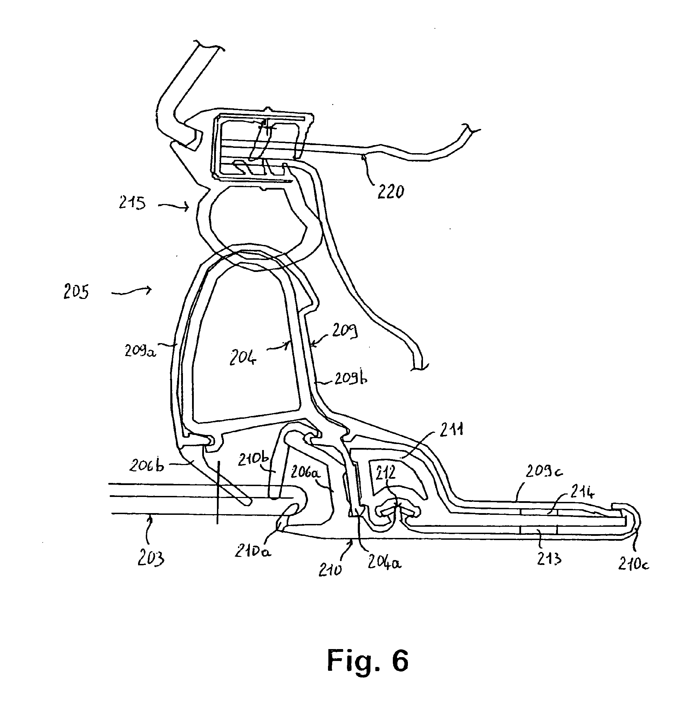

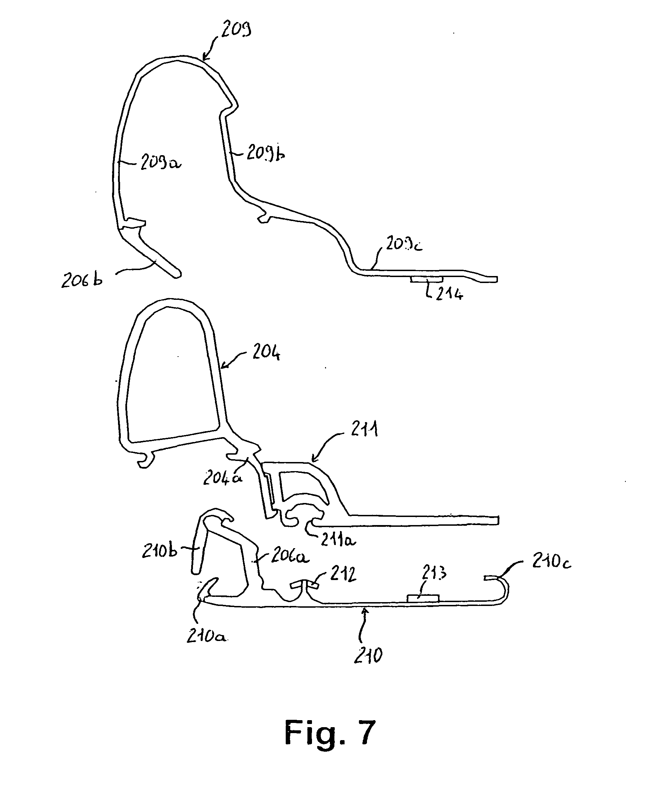

Le système d'étanchéité 205 illustré en vue éclatée à la figure 7 et en vue assemblée à la figure 6 correspond à un second exemple de réalisation de l'invention, qui concerne une coulisse à cadre caché de type à pied milieu masqué et qui illustre à la fois les parties intérieure et extérieure selon l'invention - toutes deux monobloc et obtenues par moulage - de ce système d'étanchéité 205. Comme illustré à la figure 6, ce dernier est destiné à coopérer avec un joint d'étanchéité supérieur 215 de la caisse 220 du véhicule lors de la fermeture de l'ouvrant de porte 1.

Le plan de coupe VI-VI choisi pour les figures 6 et 7 correspond à une coupe réalisée transversalement dans la zone verticale du système d'étanchéité 5 illustré à chacune des figures 1 et 2.

Comme illustré sur les figures 6 et 7, le système d'étanchéité 205 est apte à assurer à la fois des fonctions d'étanchéité et de décor :
- tant du côté extérieur du véhicule, ce système 205 comportant, à titre de garniture extérieure, un joint de demi-coulisse extérieure 206a qui est adapté pour être monté sur le cadre de porte 204 et avec lequel est formé d'un seul tenant, par moulage, un enjoliveur extérieur 210, que
- du côté intérieur du véhicule, ce système 205 comportant, à titre de garniture intérieure, un enjoliveur intérieur 209 qui est également adapté pour être monté sur le cadre 204 et qui comprend un joint de demi-coulisse intérieure 206b formé d'un seul tenant, par moulage, avec l'enjoliveur intérieur 209.

Plus précisément, l'enjoliveur extérieur 210 prolonge sensiblement à angle droit, à la manière du jambage principal d'un « λ », le joint de demi-coulisse extérieure 206a, et cet enjoliveur extérieur 210 est pourvu d'une lèvre d'étanchéité 210a prolongeant la base de ce jambage sensiblement dans la même direction pour appuyer élastiquement sur une face extérieure du vitrage 203. L'autre base du « λ » formant ce joint de demi-coulisse extérieure 206a et s'étendant axialement vers l'intérieur est également pourvue d'une lèvre d'étanchéité 210b destinée à appuyer élastiquement sur la face intérieure du vitrage 203.

De plus, le jambage principal du « λ » formé par l'enjoliveur extérieur 210 est pourvu sur sa face interne de moyens de solidarisation de cet enjoliveur 210 avec un profilé de renfort 211 du cadre 204, lequel profilé de renfort 211 est solidarisé avec ce cadre 204 par exemple par fixation mécanique sur une patte axiale 204a du cadre 204. Ces moyens pour solidariser l'enjoliveur extérieur 210 avec le profilé de renfort 211 comportent, dans l'exemple de réalisation des figures 6 et 7, un moyen d'accrochage mécanique 212, tel qu'un élément de clipage dans une cavité correspondante 211a formée sur la face axialement externe du profilé 211, combiné à un moyen de collage 213, tel qu'une bande adhésive.

Quant à l'enjoliveur intérieur 209, il présente une section transversale sensiblement en U, dont une première aile 209a se prolonge par le joint de demi-coulisse intérieure 206b qui forme une lèvre d'étanchéité destinée à appuyer élastiquement sur une face intérieure du vitrage 203, et dont la seconde aile 209b se prolonge sensiblement à angle droit en s'éloignant de la première aile 209a par une portion de fixation 209c destinée à être solidarisée, par exemple via une bande adhésive 214, avec le profilé de renfort 211 du cadre 204.

L'enjoliveur extérieur 210 présente en outre avantageusement une extrémité 210c recourbée axialement vers l'intérieur qui prolonge le jambage principal du « λ », à l'opposé de la lèvre d'étanchéité 210a, et qui est adaptée pour venir enserrer à la fois le profilé de renfort 211 et la portion de fixation 209c de l'enjoliveur intérieur 209.

Comme indiqué précédemment, le système d'étanchéité 105, 205 à garnitures moulées selon l'invention peut être fabriqué par :
- un moulage, par exemple par mono-injection ou bi-injection, de chacune des garnitures extérieure et intérieure pour la solidarisation via une interface adhérente de l'enjoliveur correspondant 109, 110, 209, 210 avec le reste de la garniture correspondante, ou bien par
- un surmoulage d'un insert formant chaque joint d'étanchéité 106a, 106b, 206a, 206b par une matière injectée formant l'enjoliveur correspondant 109, 110, 209, 210, pour la solidarisation via un accrochage mécanique de ce dernier au reste de la garniture qu'il décore.

De cette manière, on notera que le système d'étanchéité 105, 205, à garnitures extérieure et intérieure toutes deux formées d'un seul tenant, présente notamment les avantages suivants :
- un nombre minimisé d'étapes de montage de l'ensemble étanchéité/ enjoliveur en zone supérieure de porte (une à deux pièces en chacun des côtés extérieur et intérieur),
- la facilité de montage de ce système d'étanchéité,
- le découplage possible des parties extérieure et intérieure de ce système, et
- la masse relativement faible de l'ensemble du système.

## Revendications

1. Système d'étanchéité (5, 105, 205) pour un ouvrant de porte (1) à vitrage mobile (3, 103, 203) d'un véhicule à moteur, ce système comprenant au moins :
- une garniture extérieure comportant un joint de coulisse (106a, 206a) pourvu d'un enjoliveur extérieur (110, 210), et
- une garniture intérieure pour l'ouvrant incorporant un joint d'étanchéité intérieur (106b, 206b) pourvu d'un enjoliveur intérieur (109, 209), chacune desdites garnitures étant formée d'une pièce d'un seul tenant qui est au moins en partie moulée, **caractérisé en ce que** ce système d'étanchéité comprend en outre deux joints de léchage respectivement intérieur (11) et extérieur (12) pour le vitrage (3) qui sont respectivement formés d'un seul tenant avec dans lesdites garnitures intérieure et extérieure.

2. Système d'étanchéité (5, 105, 205) selon la revendication 1, **caractérisé en ce que** l'un au moins desdits enjoliveurs extérieur (110, 210) et intérieur (109, 209) est formé d'un seul tenant avec le reste de la garniture correspondante via une interface adhérente.

3. Système d'étanchéité (5, 105, 205) selon la revendication 2, **caractérisé en ce que** ladite garniture extérieure et/ou ladite garniture intérieure est/ sont constituée(s) chacune d'une pièce moulée par mono-injection ou par bi-injection.

4. Système d'étanchéité (5, 105, 205) selon la revendication 1, **caractérisé en ce que** l'un au moins desdits enjoliveurs extérieur (110, 210) et intérieur (109, 209) est formé d'un seul tenant avec le reste de la garniture correspondante via un accrochage mécanique obtenu par surmoulage d'un insert formant ce joint, par une matière injectée formant l'enjoliveur.

5. Système d'étanchéité (105, 205) selon une des revendications précédentes, ledit ouvrant (1) comportant un cadre de porte (104, 204) sur lequel est monté ledit vitrage (103, 203), **caractérisé en ce qu'**il est apte à assurer des fonctions d'étanchéité et de décor pour une coulisse à cadre caché, à la fois :
- du côté extérieur du véhicule, ce système comportant, à titre de garniture extérieure, un joint de demi-coulisse extérieure (106a, 206a) qui est adapté pour être monté sur ledit cadre de porte et avec lequel est formé d'un seul tenant, par moulage, ledit enjoliveur extérieur (110, 210), et
- du côté intérieur du véhicule, ce système comportant, à titre de garniture intérieure, ledit enjoliveur intérieur (109, 209) qui est également adapté pour être monté sur ledit cadre de porte et qui comprend un joint de demi-coulisse intérieure (106b, 206b) formé d'un seul tenant, par moulage, avec ledit enjoliveur intérieur.

6. Système d'étanchéité (105) selon la revendication 5, **caractérisé en ce qu'**il est apte à équiper un pied milieu apparent pour le véhicule, au sein d'une coulisse à cadre caché.

7. Système d'étanchéité (105) selon la revendication 6, **caractérisé en ce que** ledit enjoliveur intérieur (109) présente une section transversale sensiblement en U, dont une aile (109a) se prolonge par ledit joint de demi-coulisse intérieure (106b) qui forme une lèvre d'étanchéité destinée à appuyer élastiquement sur une face intérieure dudit vitrage (103).

8. Système d'étanchéité (105) selon la revendication 6 ou 7, **caractérisé en ce que** ledit enjoliveur extérieur (110) prolonge sensiblement à angle droit ledit joint de demi-coulisse extérieure (106a) à la manière du sommet d'un « π » dont les deux branches (106a, 106c) sont conçues pour venir enserrer une patte axiale (104a) dudit cadre (104), et **en ce que** ledit enjoliveur extérieur (110) est pourvu d'une lèvre d'étanchéité (110a) prolongeant ce sommet du « π » et destinée à appuyer élastiquement sur une face extérieure dudit vitrage (103).

9. Système d'étanchéité (205) selon la revendication 5, **caractérisé en ce qu'**il est apte à équiper un pied milieu masqué pour le véhicule, au sein d'une coulisse à cadre caché.

10. Système d'étanchéité (205) selon la revendication 9, **caractérisé en ce que** ledit enjoliveur intérieur (209) présente une section transversale sensiblement en U, dont une première aile (209) se prolonge par ledit joint de demi-coulisse intérieure (206b) qui forme une lèvre d'étanchéité destinée à appuyer élastiquement sur une face intérieure dudit vitrage (203), et dont la seconde aile (209b) se prolonge sensiblement à angle droit en s'éloignant de ladite première aile par une portion de fixation (209c) destinée à être solidarisée, par exemple via un adhésif (214), avec un profilé de renfort (211) dudit cadre (204).

11. Système d'étanchéité (205) selon la revendication 9 ou 10, **caractérisé en ce que** ledit enjoliveur extérieur (210) prolonge sensiblement à angle droit, à la manière du jambage principal d'un « λ », ledit joint de demi-coulisse extérieure (206a), et **en ce que** ledit enjoliveur extérieur est pourvu d'au moins une lèvre d'étanchéité (210a) prolongeant la base de ce jambage sensiblement dans la même direction et destinée à appuyer élastiquement sur une face extérieure dudit vitrage (203).

12. Système d'étanchéité (205) selon la revendication 11, **caractérisé en ce que** l'autre base du « λ » formant ledit joint de demi-coulisse extérieure (206a) est également pourvue d'une lèvre d'étanchéité (210b) destinée à appuyer élastiquement sur la face intérieure dudit vitrage (203).

13. Système d'étanchéité (205) selon les revendications 10 et 12, **caractérisé en ce que** le jambage principal du « λ » formé par ledit enjoliveur extérieur (210) est pourvu sur sa face axialement interne de moyens de solidarisation (212, 213) de cet enjoliveur extérieur avec ledit profilé de renfort (211) de cadre (204), par exemple par accrochage mécanique tel qu'un clipage et/ou par un adhésif (213).

14. Procédé de fabrication d'un système d'étanchéité (5, 105, 205) selon une des revendications précédentes, **caractérisé en ce qu'**il comprend :
- un moulage par injection, par exemple par mono-injection ou bi-injection, de l'une au moins desdites garnitures extérieure et intérieure pour la solidarisation via une interface adhérente dudit enjoliveur correspondant (110, 210 ou 109, 209) avec le reste de la garniture correspondante, ou bien
- un surmoulage d'un insert formant le ou chaque joint (106a, 206a ou 106b, 206b) par une matière injectée formant l'enjoliveur correspondant, pour la solidarisation via un accrochage mécanique dudit ou chaque enjoliveur au joint correspondant,
ces garnitures extérieure et intérieure incluant respectivement deux joints de léchage extérieur et intérieur pour le vitrage et étant formées chacune d'un seul tenant.

15. Véhicule à moteur comportant une caisse (120, 220) et au moins un ouvrant de porte (1) qui incorpore un vitrage mobile (3, 103, 203), par exemple un vitrage de porte latérale avant ou arrière d'un véhicule automobile, et qui est pourvu d'un système d'étanchéité (5, 105, 205) monté sur ledit ou chaque ouvrant ou sur ladite caisse, **caractérisé en ce que** ce système d'étanchéité est tel que défini à l'une des revendications 1 à 13.

## Claims

1. A sealing system (5, 105, 205) for an openable panel of a door (1) having a movable glass (3, 103, 203) for a motor vehicle, this system comprising at least:
• an external strip comprising a glass run channel gasket (106a, 206a) provided with an external trim piece (110, 210), and
• an internal strip for the openable panel incorporating an internal gasket (106b, 206b) provided with an internal trim piece (109, 209),
each of said strips being formed as a one-piece component which is at least partly molded, the system being **characterized in that** it also comprises two wiping gaskets respectively internal (11) and external (12) for the glass (3) which are included in said internal strip and external strip, respectively.

2. The sealing system (5, 105, 205) as claimed in claim 1, **characterized in that** at least one of said external (110, 210) and internal (109, 209) trim pieces is formed in one piece with the rest of the corresponding strip via an adhesive interface.

3. The sealing system (5, 105, 205) as claimed in claim 2, **characterized in that** said external strip and/or said internal strip each consist(s) of a mono-injection or bi-injection molded component.

4. The sealing system (5, 105, 205) as claimed in claim 1, **characterized in that** at least one of said external (110, 210) and internal (109, 209) trim pieces is formed in one piece with the rest of the corresponding strip via a mechanical fastening produced by overmolding an insert forming this gasket with an injection-molded material forming the trim piece.

5. The sealing system (105, 205) as claimed in one of the preceding claims, said openable panel (1) comprising a door frame (104, 204) to which said glass (103, 203) is fitted, the system being **characterized in that** it is able to perform sealing and decorative functions for a hidden frame glass run channel, both:
• on the outside of the vehicle, where this system comprises, for the external strip, an external half-channel gasket (106a, 206a) which is suitable for mounting on said door frame and with which said external trim piece (110, 210) is formed integrally by molding, and
• on the inside of the vehicle, where this system comprises, for the internal strip, said internal trim piece (109, 209) which is also suitable for mounting on said door frame and which comprises an internal half-channel gasket (106b, 206b) formed integrally, by molding, with said internal trim piece.

6. The sealing system (105) as claimed in claim 5, **characterized in that** it is able to be fitted to a visible B pillar of the vehicle, in a hidden frame glass run channel.

7. The sealing system (105) as claimed in claim 6, **characterized in that** said internal trim piece (109) is approximately U-sectioned, with one arm (109a) extended by said internal half-channel gasket (106b) which forms a sealing lip designed to press elastically against an internal face of said glass (103).

8. The sealing system (105) as claimed in claim 6 or 7, **characterized in that** said external trim piece (110) continues approximately at right angle from said external half-channel gasket (106a) in the manner of the top of a "π" whose two legs (106a, 106c) are designed to grip an axial stub (104a) of said frame (104), and **in that** said external trim piece (110) is provided with a sealing lip (110a) which continues this top of the "π" and is designed to press elastically against an external face of said glass (103).

9. The sealing system (205) as claimed in claim 5, **characterized in that** it is able to be fitted to a non-visible B pillar of the vehicle, in a hidden frame glass run channel.

10. The sealing system (205) as claimed in claim 9, **characterized in that** said internal trim piece (209) is approximately U-sectioned, with a first arm (209) extended by said internal half-channel gasket (206b) which forms a sealing lip designed to press elastically against an internal face of said glass (203), and with the second arm (209b) continues approximately at right angle away from said first arm by a fixing portion (209c) designed to be attached, for example via an adhesive (214), to a reinforcing bar (211) of said frame (204).

11. The sealing system (205) as claimed in claim 9 or 10, **characterized in that** said external trim piece (210) continues approximately at right angle, in the manner of the main leg of a "π", from said external half-channel gasket (206a), and **in that** said external trim piece is provided with at least one sealing lip (210a) which continues the base of this leg approximately in the same direction and is designed to press elastically against an external face of said glass (203).

12. The sealing system (205) as claimed in claim 11, **characterized in that** the other base of the "λ" forming said external half-channel gasket (206a) is also provided with a sealing lip (210b) designed to press elastically against the internal face of said glass (203).

13. The sealing system (205) as claimed in claims 10 and 12, **characterized in that** the main leg of the "λ" formed by said external trim piece (210) is provided on its axially internal face with means (212, 213) for attaching this external trim piece to said frame (204) reinforcing bar (211), by for example mechanical fastening such as clips and/or adhesive (213).

14. A method for making a sealing system (5, 105, 205) as claimed in one of the preceding claims, **characterized in that** it comprises:
• injection molding, by for example mono-injection or bi-injection molding, one or both of said external strip piece and said internal strip piece for the attachment via an adhesive interface of said corresponding trim piece (110, 210 or 109, 209) to the rest of the corresponding strip, or
• overmolding an insert forming the or each gasket (106a, 206a or 106b, 206b) with an injected material forming the corresponding trim piece for the attachment via mechanical fastening of said or each trim piece to the corresponding gasket,
which external strip and internal strip include an external wiping gasket and an internal wiping gasket, respectively, for the glass and are each formed in one piece.

15. A motor vehicle comprising a body (120, 220) and at least one openable panel for a door (1) that incorporates a movable glass (3, 103, 203), such as a glass for a front or rear side door of a motor vehicle, and which is provided with a sealing system (5, 105, 205) fitted to said or each openable panel or to said body, the vehicle being **characterized in that** this sealing system is as defined in one of claims 1 to 13.

## Patentansprüche

1. Dichtsystem (5, 105, 205) für einen Türflügel (1) mit einem beweglichen Fenster (3, 103, 203) eines Kraftfahrzeugs, wobei das System zumindest aufweist:
- eine äußere Packung, die eine Leistendichtung (106a, 206a) aufweist, die mit einer äußeren Abdeckung (110, 210) versehen ist, und
- eine innere Packung für den Flügel, die eine Innendichtung (106b, 206b) einschließt, die mit einer inneren Abdeckung (109, 209) versehen ist,
wobei jede der Packungen aus einem einstückigen Teil ausgebildet ist, das zumindest teilweise geformt ist, **dadurch gekennzeichnet, dass** das Dichtsystem ferner zwei Überstreichdichtungen, eine innere (11) bzw. eine äußere (12), für das Fenster (3) aufweist, die mit der äußeren Packung bzw. inneren Packung einstückig ausgebildet sind.

2. Dichtsystem (5, 105, 205) nach Anspruch 1, **dadurch gekennzeichnet, dass** zumindest eine der Abdeckungen, äußere Abdeckung (110, 210) und innere Abdeckung (109, 209), mit dem Rest der entsprechenden Packung über eine klebende Grenzfläche einstückig ausgebildet jst.

3. Dichtsystem (5, 105, 205) nach Anspruch 2, **dadurch gekennzeichnet, dass** die äußere Packung und/oder innere Packung jeweils aus einem Stück ausgebildet ist/sind, das durch Einfacheinspritzen oder Zweifacheinspritzen geformt ist.

4. Dichtsystem (5, 105, 205) nach Anspruch 1, **dadurch gekennzeichnet, dass** zumindest eine der Abdeckungen, äußere Abdeckung (110, 210) und innere Abdeckung (109, 209), mit dem Rest der entsprechenden Packung über ein mechanisches Anbringen einstückig ausgebildet ist, das durch Überformen eines diese Dichtung bildenden Einsatzes mit einem die Abdeckung bildenden, eingespritzten Material erhalten wird.

5. Dichtsystem (105, 205) nach einem der vorhergehenden Ansprüche, wobei der Flügel (1) einen Türrahmen (104, 204) aufweist, an dem das Fenster (103, 203) montiert ist, **dadurch gekennzeichnet, dass** dieses in der Lage ist, die Dicht- und Dekorfunktion für eine Leiste mit verdecktem Rahmen abzusichern gleichzeitig:
- von der Außenseite des Fahrzeugs, wobei das System als äußere Packung eine Dichtung (106a, 206a) der äußeren Halbleiste aufweist, die in der Lage ist, an dem Türrahmen montiert zu sein, und mit der durch Formen die äußere Abdeckung (110, 210) einstückig ausgebildet ist, und
- von der Innenseite des Fahrzeugs, wobei das System als innere Packung die innere Abdeckung (109, 209) aufweist, die ebenfalls in der Lage ist, an dem Türrahmen montiert zu sein, und die eine Dichtung (106b, 206b) der inneren Halbleiste aufweist, die durch Formen mit der inneren Abdeckung einstückig ausgebildet ist.

6. Dichtsystem (105) nach Anspruch 5, **dadurch gekennzeichnet, dass** dieses in der Lage ist, eine sichtbare B-Säule für das Fahrzeugs in einer Leiste mit verdecktem Rahmen auszustatten.

7. Dichtsystem (105) nach Anspruch 6, **dadurch gekennzeichnet, dass** die innere Abdeckung (109) einen Querschnitt im Wesentlichen in U-Form aufweist, dessen einer Flügel (109a) durch die Dichtung (106b) der inneren Halbleiste fortgesetzt ist, die eine Dichtlippe bildet, die dazu bestimmt ist, elastisch auf die Innenfläche des Fensters (103) zu drücken.

8. Dichtsystem (105) nach Anspruch 6 oder 7, **dadurch gekennzeichnet, dass** die äußeren Abdeckung (110) im Wesentlichen im rechten Winkel die Dichtung (106a) der äußeren Halbleiste in der Weise eines "π"-förmigen Scheitels fortsetzt, dessen zwei Zweige (106a, 106c) so gestaltet sind, dass diese einen axialen Fuß (104a) des Rahmens (104) aufnehmen, und dass die äußere Abdeckung (110) mit einer Dichtlippe (110a) versehen ist, die diesen "π"-förmigen Scheitel fortsetzt und dazu bestimmt ist, elastisch auf eine Außenfläche des Fensters (103) zu drücken.

9. Dichtsystem (205) nach Anspruch 5, **dadurch gekennzeichnet, dass** dieses in der Lage ist, eine verdeckte B-Säule für das Fahrzeugs in einer Leiste mit verdecktem Rahmen auszustatten.

10. Dichtsystem (205) nach Anspruch 9, **dadurch gekennzeichnet, dass** die innere Abdeckung (209) einen Querschnitt im Wesentlichen in U-Form aufweist, dessen erster Flügel (209) durch die Dichtung (206b) der inneren Halbleiste fortgesetzt ist, die eine Dichtlippe bildet, die dazu bestimmt ist, elastisch auf eine Innenfläche des Fensters (203) zu drücken, und dessen zweiter Flügel (209b) im Wesentlichen im rechten Winkel, wobei sich von dem ersten Flügel entfernt wird, durch einen Befestigungsabschnitt (209c) fortgesetzt ist, der dazu bestimmt ist, beispielsweise durch ein Klebemittel (214) mit einem Verstärkungsprofil (211) des Rahmens (204) fest verbunden zu sein.

11. Dichtsystem (205) nach Anspruch 9 oder 10, **dadurch gekennzeichnet, dass** die äußere Abdeckung (210) die Dichtung (206a) der äußeren Halbleiste im Wesentlichen im rechten Winkel in der Art und Weise eines Hauptfußes mit einem "λ" fortsetzt und dass die äußere Abdeckung mit zumindest einer Dichtlippe (210a) versehen ist, die den Grundabschnitt dieses Fußes im Wesentlichen in der gleichen Richtung fortsetzt und dazu bestimmt ist, elastisch an eine Außenfläche des Fensters (203) zu drücken.

12. Dichtsystem (205) nach Anspruch 11, **dadurch gekennzeichnet, dass** der andere Grundabschnitt des "λ", der die Dichtung (206a) der äußeren Halbleiste bildet, ebenfalls mit einer Dichtlippe (210b) versehen ist, die dazu bestimmt ist, elastisch an die Innenfläche des Fensters (203) zu drücken.

13. Dichtsystem (205) nach Anspruch 10 und 12, **dadurch gekennzeichnet, dass** der Hauptfuß mit "λ", der durch die äußere Abdeckung (210) gebildet ist, an seiner axialen Innenfläche mit einer Einrichtung (212, 213) zur Befestigung von dieser äußeren Abdeckung an dem Verstärkungsprofil (211) des Rahmens (204) beispielsweise durch mechanisches Anbringen, wie z.B. eine Klemmverbindung, und/oder durch ein Klebemittel (213) versehen ist.

14. Herstellungsverfahren eines Dichtsystems (5, 105, 205) nach einem der vorhergehenden Ansprüche, **dadurch gekennzeichnet, dass** dieses aufweist:
- ein Einspritzen, beispielsweise durch Einfacheinspritzen oder Zweifacheinspritzen, von zumindest einer der Packungen, äußere Packung und innere Packung, für das Befestigen über eine klebende Grenzfläche der entsprechenden Abdeckung (110, 210 oder 109, 209) an dem Rest der entsprechenden Packung, oder auch
- ein Überformen eines Einsatzes, der die eine oder jede Dichtung (106a, 206a oder 106b, 206b) bildet, mit einem eingespritzten Material, das die entsprechende Abdeckung bildet, für das Befestigen über das mechanische Anbringen von der Abdeckung oder jeder Abdeckung an der entsprechenden Dichtung,
wobei diese Packungen, die äußere und innere Packung, jeweilige der zwei Überstreichdichtungen, eine äußere und eine innere, für das Fenster aufweisen und jeweils einstückig ausgebildet sind.

15. Kraftfahrzeug, das eine Karosserie (120, 220) und zumindest einen Türflügel (1) aufweist, der ein bewegliches Fenster (3, 103, 203), beispielsweise ein vorderes oder hinteres Türseitenfenster eines Kraftfahrzeugs, einschließt, und das mit einem Dichtsystem (5, 105, 205) versehen ist, das an dem Flügel oder jedem Flügel oder an der Karosserie montiert ist, **dadurch gekennzeichnet, dass** das Dichtsystem ein solches ist, das in einem der Ansprüche 1 bis 13 definiert ist.
